# EUROPÄISCHE PATENTANMELDUNG

(11) **EP 2 302 225 A1**
(43) Veröffentlichungstag der Anmeldung: **30.03.2011**
(21) Anmeldenummer: 10009524.9
(22) Anmeldetag: 14.09.2010
(51) Int. Cl.: F16B 7/04

(54) **Verbindungsmechanismus**

(30) Priorität: 16.09.2009 DE 202009012601 U
(71) Anmelder: Schunke, Kurt, 32427 Minden (DE)
(72) Erfinder: Schunke, Kurt, 32427 Minden (DE)
(74) Vertreter: Schober, Mirko

(57) **Zusammenfassung**

Ein Verbindungsmechanismus dient zur Verbindung eines ersten Verbindungskörpers (1) mit einem zweiten Verbindungskörper (2) der zur teilweisen Aufnahme in den ersten Verbindungskörper (1) ausgelegt ist. Es ist eine Fixiereinrichtung (3) vorgesehen, um die beiden Verbindungskörper (1,2) kraftschlüssig zueinander zu fixieren. Die Fixiereinrichtung (3) ist im zweiten Verbindungskörper (2) angeordnet. Sie weist ein Betätigungselement (3a) zur Betätigung derselben, eine mit dem Betätigungselement (3a) zusammenwirkendes Übertragungselement (3b) und ein mit dem Übertragungselement (3b) zusammenwirkendes Spannelement (3c) auf. Das Spannelement (3c) wird beim Betätigen der Fixiereinrichtung (3) gegen einen Abschnitt (2a) eines Verbindungskörpers (1,2) gedrückt. Das Übertragungselement (3b) liegt direkt oder indirekt an einem Stützabschnitt (2b) des zweiten Verbindungskörpers (2) an und weist einen gewölbten mittleren Abschnitt (3b.3) auf, welcher zur Anlage gegen ein Auflageelement (3d) ausgebildet ist, das im Bereich der Anlage des mittleren Abschnitts (3b.3) des Übertragungselementes ebenfalls eine Wölbung aufweist, die so ausgelegt ist, dass das Übertragungselement (3b) mit seinem gewölbten Abschnitt (3b.3) in der Wölbung des Auflageelements (3d) verschwenkbar ist.

## Beschreibung

Die Erfindung betrifft einen Verbindungsmechanismus zur Verbindung zweier Verbindungskörper nach dem Oberbegriff des Anspruchs 1.

Es ist ein entsprechendes System zur Verbindung von Rundrohren bekannt, bei dem ein in einem inneren Verbindungskörper drehbar angelenktes Übertragungselement mittels einer Madenschraube bewegt und ein Spannelement dadurch gegen die Innenwand eines den inneren Verbindungskörper aufnehmenden Rundrohres gedrückt wird. Durch den Kraftschluss werden der innere Verbindungskörper und das Rundrohr miteinander verbunden.

Diese Art der Verbindung erweist sich als nicht hinreichend stabil, zumal lediglich eine punktuelle Belastung der Rohrwand erfolgt. Ein sicheres oder festes Spannen ist nicht möglich, zumal die Kraft beim Festziehen vom Drehgelenk des Übertragungselementes aufgenommen werden muss. Hieraus ergibt sich eine Schwachstelle.

Der Erfindung liegt daher die Aufgabe zugrunde, einen dahingehend verbesserten Verbindungsmechanismus der eingangs genannten Art anzugeben.

Gelöst wird diese Aufgabe mit den Merkmalen des Anspruchs 1. Vorteilhafte Ausführungsformen finden sich in den Unteransprüchen.

Erfindungsgemäß ist vorgesehen, dass das Übertragungselement direkt oder indirekt an einem Stützabschnitt des zweiten Verbindungskörpers anliegt. Dadurch ist eine drehgelenkige Lagerung des Übertragungselementes nicht mehr erforderlich und die beim Spannen und Festziehen auf das Übertragungselement wirkende Kraft wird direkt in den Verbindungskörper eingeleitet, ohne dass Kräfte in ein Drehgelenk fließen und die Lagerung des Übertragungselements und damit die Funktionsweise des Verbindungsmechanismus einschränken.

Bevorzugt ist das Übertragungselement als Wippe ausgebildet, deren mittlerer gebogener Abschnitt sich auf dem Stützabschnitt oder auf einem auf dem Stützabschnitt befindlichen Auflageelement abstützt.

Vorzugsweise ist dabei eine Montagehilfe vorgesehen, die dazu dient, Übertragungselement, Stützabschnitt, und/oder andere, im unverspannten Zustand des Verbindungsmechanismus bewegliche Teile zu sichern, um so die Montage zu erleichtern.

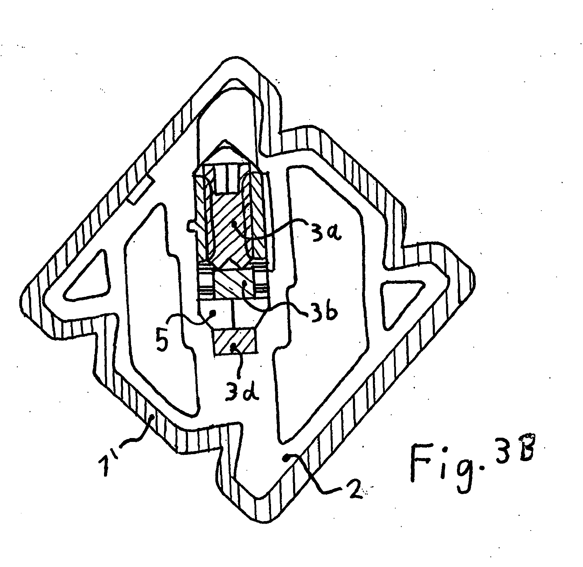

Die Erfindung wird nachfolgend anhand eines Ausführungsbeispiels in den Figuren 1A bis 3B schematisch näher erläutert.
- Figur 1A -: zeigt einen Diagonalschnitt in Längsrich- tung zweier mit dem Verbindungsmechanismus zu verbindender Verbindungskörper im noch nicht verspannten Zustand,
- Figur 1B -: zeigt einen Diagonalschnitt in Längsrich- tung zweier mit dem Verbindungsmechanismus zu verbindender Verbindungskörper im ver- spannten Zustand,
- Figur 2A -: zeigt einen Querschnitt durch zwei mit dem Verbindungsmechanismus zu verbindende Ver- bindungskörper im noch nicht verspannten Zustand,
- Figur 2B -: zeigt einen Querschnitt durch zwei mit dem Verbindungsmechanismus zu verbindende Ver- bindungskörper im verspannten Zustand,

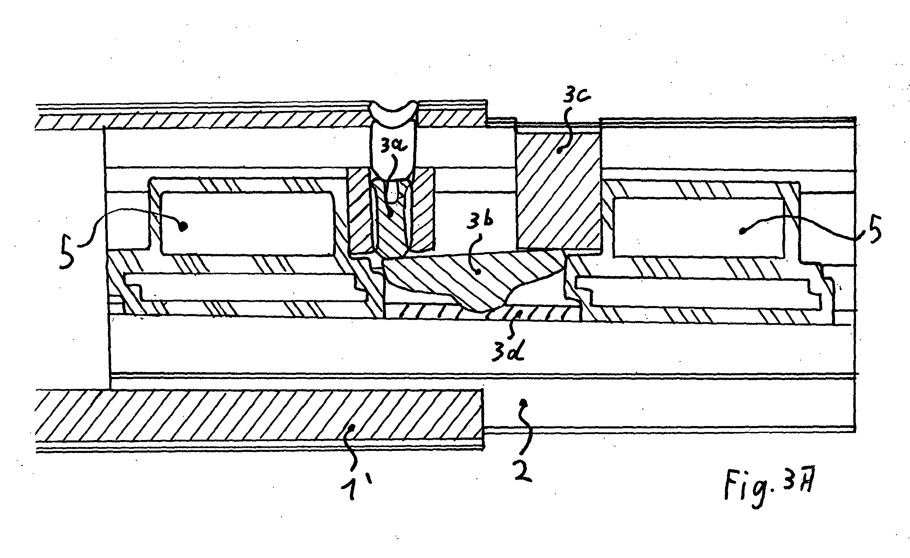

- Figur 3A -: zeigt einen Querschnitt eines beispielhaf- ten erfindungsgemäßen Verbindungsmechanis- mus mit Montagehilfen,
- Figur 3B -: zeigt einen Diagonalschnitt in Längsrich- tung eines beispielhaften erfindungsgemäßen Verbindungsmechanismus mit Montagehilfen.

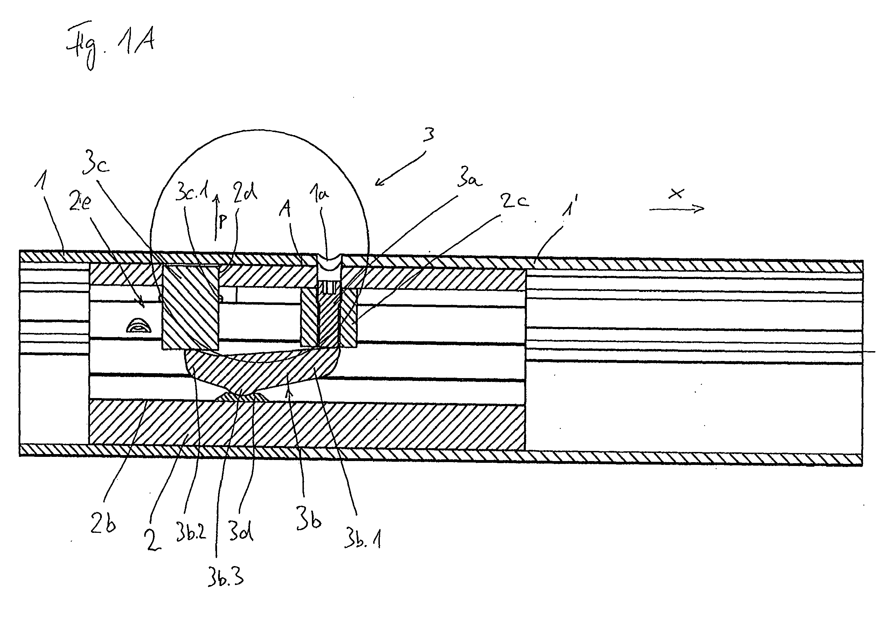

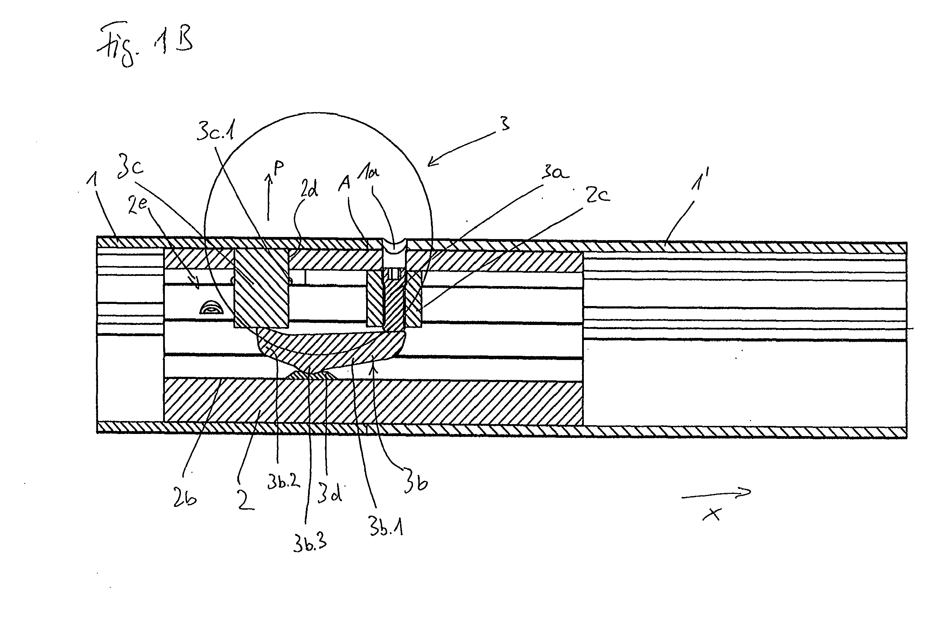

In den in den Figuren 1A und 1B gezeigten Darstellungen ist die Funktionsweise der Erfindung verdeutlicht. Gezeigt ist ein Diagonalschnitt in Längsrichtung durch als Profile 1, 2 ausgebildete Verbindungskörper. Ein erster Verbindungskörper 1 ist als Außenprofil, ein zweiter Verbindungskörper 2 mit einem das Außenprofil aufnehmenden Innenprofil ausgebildet. Zur kraftschlüssigen Verbindung des Außenprofils 1 und des Innenprofils 2 ist ein Verbindungsmechanismus 3 vorgesehen, welcher im Innenprofil 2 gelagert ist. Das Innenprofil 2 ist fest mit einem weiteren äußeren Profilabschnitt 1' verbunden, der entlang der Linie A eine bündige Anlage für das am Innenprofil 2 mittels des Verbindungsmechanismus 3 zu befestigende Außenprofil 1 bildet und eine Öffnung 1a aufweist, durch welche ein Spannwerkzeug (Schraubendreher, Sechskantschlüssel oder dergleichen, nicht gezeigt) zur Betätigung des Verbindungsmechanismus 3 geführt werden kann.

Die feste Verbindung des Innenprofils 2 mit dem weiteren äußeren Profilabschnitt 1' erfolgt dabei vorzugsweise durch eine Verklebung. Insbesondere finden dabei Spezialklebstoffe, vorzugsweise Zwei-Komponenten-Klebstoffe Verwendung. Damit wird eine Zugfestigkeit der Verklebung der Bauteile in Profillängsrichtung von 3 bis 5 N/mm² bezogen auf die Fläche der Klebstoffschicht erreicht, d.h. die Zugfestigkeit ist hier auf die resultierende Scherbeanspruchung der Klebstoffschicht bezogen. Derartige Klebverbindungen sind insbesondere auch dafür geeignet, dynamische Belastungen aufzunehmen.

Vorzugsweise sind der als Außenprofil ausgebildete erste Verbindungskörper 1 und der äußere Profilabschnitt 1' dabei aus Stahl gefertigt, vorzugsweise findet ein handelsübliches Stahlrohr Verwendung. Insbesondere bei der Verwendung von Vierkantrohren finden vorzugsweise modifizierte handelsübliche Rohre Anwendung, insbesondere werden innere Schweißnähte geschält und die Maße der Eckradien, insbesondere der Tolerierung, gegenüber den Definition der für derartige Rohre einschlägigen DIN-EN-Normen geändert, um die Passung und Montierbarkeit des, vorzugsweise aus einer technischen Aluminiumlegierung gefertigten, zweiten Verbindungskörpers 2 zu gewährleisten.

Zur Betätigung ist ein bevorzugt als Madenschraube ausgebildetes Betätigungselement 3a vorgesehen, welches in einem im Innenprofil 3 befindlichen Gewinde 2c geführt ist. Das Gewinde 2c kann dabei in einem, beispielsweise aus einem vorgewalzten Stahlprofil gefertigten, Bauteil vorgesehen sein, welches vorzugsweise als eine Art Spannkeil ausgebildet ist und eine Kraftübertragung zwischen Profilabschnitt 1' und/oder dem Verbindungskörper 2 zum einen und dem Betätigungselement 3a zum anderen gewährleisten kann. Alternativ kann das Gewinde 2c direkt in den Verbindungskörper 2 eingebracht sein. Das Betätigungselement 3a wirkt bei Betätigung an seinem der Öffnung 1a abgewandten Ende mit einem wippenartig aufgebauten und gelagerten Übertragungselement 3b zusammen. Dieses wiederum weist einen Abschnitt 3b.1, der mit dem Betätigungselement 3a in Kontakt steht, einen mittleren Abschnitt 3b.3, der auf einem Stützabschnitt 2b oder einem darauf liegenden Auflageelement 3d aufliegt, sowie einen weiteren Abschnitt 3b.2 auf, der auf der dem mittleren Abschnitt 3b.2 gegenüberliegenden Seite des Abschnitts 3b.1 angeordnet ist und sich in Kontakt mit einem Spannelement 3c befindet, welches wiederum in dem Innenprofil 2 etwa senkrecht zur Profillängsachse X in einer Öffnung 2d verschieblich geführt ist. Der Abschnitt 3b.3 des Übertragungselements 3b weist einen der Auflage 2b bzw. dem Auflageelement 3d zugewandten, abgerundeten oder gewölbten Abschnitt auf. Entsprechend komplementär ist auch der Gegenabschnitt 3d bzw. 2b (nicht gezeigt) gewölbt, so dass die auf das Übertragungselement 3b vom Betätigungselement 3a wirkende Kraft zu einer Wippbewegung führt, deren Drehbereich im Bereich des gewölbten oder runden Abschnitts 3b.3 liegt. Die hieraus resultierenden Kräfte werden zum einen in eine Wippbewegung zum Anheben des Spannelements 3c, welches bevorzugt aus einem, insbesondere vorgewalzten, Stahlprofil hergestellt ist, umgesetzt, zum anderen werden Kräfte, insbesondere auch Gegenkräfte, die bei Herstellung des Kraftschlusses zwischen Spannelement 3c und der Innenwand des Profils 1 entstehen, über den Abschnitt 3b.3 in die Auflage und/oder direkt in den Stützabschnitt 2b des inneren Profils eingeleitet. Dies ermöglicht gegenüber dem Stand der Technik eine wesentlich sicherere Bedienung und eine geringere Gefahr von Beschädigungen. Zudem sind wesentlich höhere Haltekräfte und damit festere Verbindungen möglich.

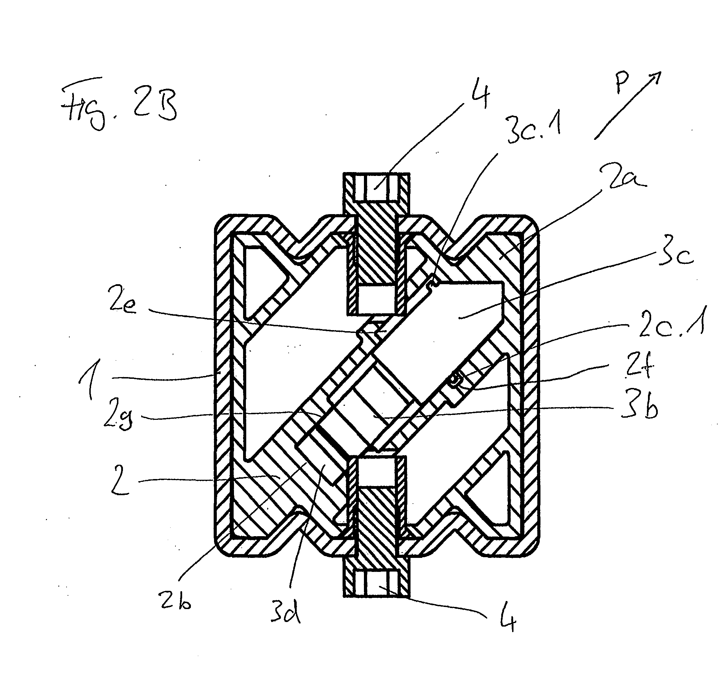

Wird das Betätigungselement in das Profil 2 hineingedreht, so drückt dieses gegen das Übertragungselement 3b, so dass der Abschnitt 3b.1 abgesenkt und der Abschnitt 3b.3 entsprechend in Richtung des Pfeils P angehoben wird. So wird der in Figur 1A gezeigte Spalt zwischen dem Spannelement 3c und der Innenwand des Außenprofils 1 geschlossen und das Spannelement 3c wandert durch die Öffnung 2d hindurch und verspannt mit der Wand des Außenprofils 1. Diese Situation ist in Figur 2B gezeigt, in der das Spannelement 3c mit der Innenseite des Profils 1 in Kontakt steht und die beiden Profile 1, 2 (Verbindungskörper) miteinander verbindet.

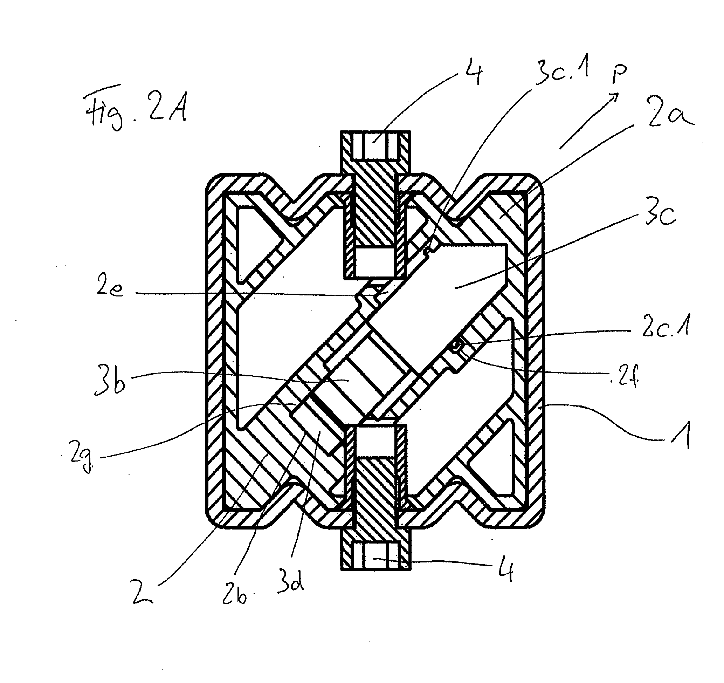

In den Figuren 2A und 2B sind den Figuren 1A und 1B entsprechende Abbildungen im Querschnitt (Schnitt quer zur Längsachse X) gezeigt. Auch hier ist der Spannkeil 3c in Figur 2B gegenüber der in Figur 2A gezeigten Situation in Richtung des Pfeils P verschoben, wie insbesondere an der Position des Vorsprungs 3c.1 erkennbar ist, der in einer Ausnehmung des Profils 2 geführt ist. Entsprechend weist auch das Gewinde 2c einen Vorsprung 2c.1 auf, welcher in einer Führung im Innenprofil 2 geführt ist. Der eigentliche Verbindungsmechanismus 3 aus Spannelement 3c, Übertragungselement 3b und Betätigungselement 3a mit Gewinde 2c ist also im inneren Verbindungskörper 2 in einem Hohlraum angeordnet, der in der Diagonalen des Innen- bzw. Außenprofils verläuft. Die Verschiebung des Spannelements 3c erfolgt also in Richtung der Diagonalen der im Wesentlichen rechteckig ausgebildeten Profile, so dass sich eine besonders stabile kraftschlüssige und formschlüssige Verbindung zwischen den Verbindungskörpern 1 und 2 ergibt. Diese kann ggf. noch unterstützt werden durch zusätzliche Verschraubungen 4, welche durch das Außenprofil 1 in ein im Innenprofil 2 befindliches Gewinde eingeschraubt werden.

Im gezeigten Beispiel ist vorgesehen, dass die Fixiereinrichtung 3 lose in das Innenprofil 2 eingesetzte Teile aufweist. So sind im Innenprofil 2 kanalartige Vertiefungen 2e und 2f vorgesehen, in denen das Spannelement 3c mit seinem Vorsprung 3c.1 sowie entsprechend der Gewindeabschnitt 2c mit seinem Vorsprung 2c.1 geführt sind. Die genannten Bauteile sind somit entlang der Profillängsachse X im Innenprofil 2 verschieblich, so dass die Fixiereinrichtung 3 an beliebiger Stelle im Innenprofil 2 vorgesehen werden kann. Dies ist insbesondere von Vorteil, um etwa den bestmöglichen Punkt für den Kraftschluss zwischen Innenprofil 2 und Außenprofil 1 einzustellen. Auch das Übertragungselement 3b und (wenn vorhanden) das Auflageelement 3d sind im gezeigten Beispiel in einem längs der X-Achse verlaufenden Kanal 2g verschieblich. Soll die Fixiereinrichtung 3 verschoben werden, muss lediglich eine neue Bohrung 1a durch das Innenprofil 2 sowie eine entsprechende Ausnehmung 2d vorgesehen werden. Nach einer bevorzugten Ausführungsform können im Innenprofil 2 eine Mehrzahl Ausnehmungen 2d für das Spannelement 3c und eine Mehrzahl Öffnungen für das Betätigungselement 3a entlang der Länge des Innenprofils 2 vorgesehen sein.

Vorteilhafterweise kann der Verbindungsmechanismus mindestens eine, vorzugsweise als Kunststoffteil ausgebildete, Montagehilfe 5 aufweisen, die geeignet ist, Übertragungselement 3b, Auflageelement 3d, Betätigungselement 3a, Spannelement 3c und/oder andere Bestandteile der Fixiereinrichtung 3, im unverspannten Zustand des Verbindungsmechanismus am Verlassen ihrer Montagegerechten Position zu hindern. Dabei handelt es sich vorzugsweise um Kunststoffkörper, die in das Innenprofil 2 eingeschoben werden und an Übertragungselement 3b, Auflageelement 3d, Betätigungselement 3a, Spannelement 3c und/oder anderen Bestandteilen der Fixiereinrichtung 3 entweder anliegen oder nur mit so viel Spiel beabstandet von diesen platziert sind, dass eine Bewegung von Übertragungselement 3b, Auflageelement 3d, Betätigungselement 3a, Spannelement 3c und/oder anderer Bestandteile der Fixiereinrichtung 3 die Funktion der Fixiereinrichtung 3 nicht beeinträchtigt. Die Montagehilfe 5, von der vorzugsweise zwei auf beiden Seiten der Fixiereinrichtung 3 vorgesehen sind, sichert sich im Innenprofil vorzugsweise durch eine Press- bzw. Übermaßpassung.

Vorzugsweise ist die Montagehilfe an der der Fixiereinrichtung zugewandten Seite derart konturiert, dass seine Kontur auf die Form der zu sichernden Elemente der Fixiereinrichtung 3 abgestimmt ist. Dies bedeutet insbesondere, dass die der Fixiereinrichtung 3 zugewandte Seite der Montagehilfe 5 mehrere Elemente der Fixiereinrichtung 3 gleichzeitig absichern kann, indem verschieden weit vorstehende Abschnitte in der Kontur, abgestimmt auf die Geometrie der zu sichernden Elemente der Fixiereinrichtung 3 vorgesehen sind. Besonders bevorzugt sind zwei gleichartige Montagehilfen 5 vorgesehen, die auf jeweils ihrer einen Seite für die Sicherung der Elemente der Fixiereinrichtung 3 aus der einen und auf ihrer anderen Seite für die Sicherung der Elemente der Fixiereinrichtung 5 aus der anderen Richtung konturiert sind.

## Patentansprüche

1. Verbindungsmechanismus zur Verbindung eines ersten Verbindungskörpers (1) mit einem zweiten Verbindungskörper (2), wobei der zweite Verbindungskörper (2) zur wenigstens teilweisen Aufnahme in den ersten Verbindungskörper (1) ausgelegt ist und wobei eine Fixiereinrichtung (3) vorgesehen ist, um den ersten Verbindungskörper (1) und den zweiten Verbindungskörper (2) kraftschlüssig relativ zueinander zu fixieren, wobei die Fixiereinrichtung (3) in einem Verbindungskörper (2) angeordnet ist und ein Betätigungselement (3a) zur Betätigung derselben, eine mit dem Betätigungselement (3a) bei dessen Betätigung zusammenwirkendes Übertragungselement (3b) und ein mit dem Übertragungselement (3b) zusammenwirkendes Spannelement (3c) aufweist, wobei das Spannelement (3c) beim Betätigen der Fixiereinrichtung (3) gegen einen Abschnitt (2a) eines Verbindungskörpers (1, 2) gedrückt und so eine kraftschlüssige Verbindung der beiden Verbindungskörper (1, 2) hergestellt wird, wobei das Übertragungselement (3b) direkt oder indirekt an einem Stützabschnitt (2b) des zweiten Verbindungskörpers (2) anliegt,
**dadurch gekennzeichnet,**
**dass** das Übertragungselement (3b) einen gewölbten mittleren Abschnitt (3b.3) aufweist, welcher zur Anlage gegen ein Auflageelement (3d) ausgebildet ist, wobei das Auflageelement (3d) im Bereich der Anlage des mittleren Abschnitts (3b.3) des Übertragungselementes ebenfalls eine Wölbung aufweist, die so ausgelegt ist, dass das Übertragungselement (3b) mit seinem gewölbten Abschnitt (3b.3) in der Wölbung des Auflageelements (3d) liegt und darin verschwenkbar ist.

2. Verbindungsmechanismus nach Anspruch 1,
**dadurch gekennzeichnet,**
**dass** der Stützabschnitt (2b) auf der dem Betätigungs- und/oder Spannelement (3a, 3c) abgewandten Seite des Übertragungselements (3b) liegt.

3. Verbindungsmechanismus nach Anspruch 1 oder 2,
**dadurch gekennzeichnet,**
**dass** das Übertragungselement (3b) nach Art einer Wippe ausgebildet ist, an deren ersten, auf der einen Seite des Schwenkbereichs des Übertragungselements (3b) liegenden Abschnitt (3b.1) das Betätigungselement (3a) angreifen kann und deren auf der anderen Seite des Schwenkbereichs des Übertragungselements (3b) liegender Abschnitt (3b.2) zur Anlage gegen das Spannelement (3c) ausgebildet ist.

4. Verbindungsmechanismus nach einem der vorherigen Ansprüche,
**dadurch gekennzeichnet,**
**dass** die Verbindungskörper (1, 2) Vierkantprofile sind und dass das Betätigungselement (3a) im Wesentlichen in Bezug auf den Querschnitt der Verbindungskörper (1, 2) in Diagonalrichtung beweglich ausgebildet ist.

5. Verbindungsmechanismus nach einem der vorherigen Ansprüche,
**dadurch gekennzeichnet,**
**dass** der erste Verbindungskörper (1) ein den zweiten Verbindungskörper (2) aufnehmendes Außenprofil ist, welches eine Öffnung (1a) zur Betätigung des Betätigungselementes (3a) aufweist.

6. Verbindungsmechanismus nach einem der vorherigen Ansprüche,
**dadurch gekennzeichnet,**
**dass** der zweite Verbindungskörper (2) ein in den ersten Verbindungskörper (1) aufgenommenes Innenprofil ist und die Fixiereinrichtung (3) im Innenprofil (2) vorgesehen ist.

7. Verbindungsmechanismus nach einem der vorherigen Ansprüche,
**dadurch gekennzeichnet,**
**dass** an einem Verbindungskörper (1, 2) wenigstens zwei Fixiereinrichtungen (3) vorgesehen sind.

8. Verbindungsmechanismus nach einem der vorherigen Ansprüche,
**dadurch gekennzeichnet,**
**dass** die Fixiereinrichtung (3) im zweiten Verbindungskörper (2) entlang einer Längsachse (X) desselben verschieblich ausgebildet ist.

9. Verbindungsmechanismus nach Anspruch 8,
**dadurch gekennzeichnet,**
**dass** das Spannelement (3c) einen Vorsprung (3c.1) aufweist, der in einem parallel zur Längsachse (X) des zweiten Verbindungskörpers verlaufenden Kanal (2e) geführt ist.

10. Verbindungsmechanismus nach Anspruch 8 oder 9,
**dadurch gekennzeichnet,**
**dass** der zweite Verbindungskörper (2) zur Aufnahme des Betätigungselementes (3a) ein Aufnahmeelement (2c) aufweist, welches einen Vorsprung (2c.1) aufweist, der in einem parallel zur Längsachse (X) des zweiten Verbindungskörpers (2) verlaufenden Kanal (2f) geführt ist.

11. Verbindungsmechanismus nach einem der Ansprüche 8 bis 10,
**dadurch gekennzeichnet,**
**dass** das Übertragungselement (3b) und/oder das Auflageelement (2d) in einem parallel zur Längsachse (X) des zweiten Verbindungskörpers (2) verlaufenden Kanal (2g) geführt ist/sind.

12. Verbindungsmechanismus nach einem der vorherigen Ansprüche,
**dadurch gekennzeichnet,**
**dass** der zweite Verbindungskörper eine Mehrzahl Öffnungen zur Aufnahme und/oder Durchführung des Spannelements (3c) und/oder Betätigungselements (3a) aufweist.

13. Verbindungsmechanismus nach einem der vorigen Ansprüche,
**dadurch gekennzeichnet,**
**dass** mindestens eine, vorzugsweise als Kunststoffteil ausgebildete, Montagehilfe vorgesehen ist, die geeignet ist, Übertragungselement (3b), Auflageelement (3d), Betätigungselement (3a), Spannelement (3c) und/ oder andere Bestandteile der Fixiereinrichtung (3), im unverspannten Zustand des Verbindungsmechanismus am Verlassen ihrer Montagegerechten Position zu hindern.
